# FASCICULE DE BREVET EUROPEEN

(11) **EP 2 981 598 B1**
(45) Date de publication et mention de la délivrance du brevet: **28.06.2017**
(21) Numéro de dépôt: 14719053.2
(22) Date de dépôt: 27.03.2014
(51) Int. Cl.: C10L 9/08, C10L 5/44, F26B 21/10, G01G 3/18, G01G 19/00, F26B 25/22

(54) **PROCEDE DE TORREFACTION DE LA BIOMASSE**
VERFAHREN ZUM RÖSTEN VON BIOMASSE
METHOD FOR ROASTING BIOMASS

(30) Priorité: 03.04.2013 FR 1353006
(43) Date de publication de la demande: 10.02.2016
(73) Titulaire: CSJ Technologie, 26800 Portes Les Valence (FR)
(72) Inventeur: DELAINE, Patrick, F-18230 Saint Doulchard (FR)
(74) Mandataire: Goulard, Sophie
(86) Numéro de dépôt international: PCT/FR2014/050727
(87) Numéro de publication internationale: WO 2014/162082

(56) Documents cités:
- EP-A1- 2 530 134
- WO-A1-2014/060439
- BE-A- 440 754
- FR-A1- 2 786 426
- US-A- 5 085 527
- US-A1- 2008 217 444

## Description

L'invention se rapporte à un procédé de torréfaction de la biomasse. Un tel procédé est particulièrement adapté à la torréfaction du bois. Généralement, un procédé de torréfaction de la biomasse est un procédé de traitement thermochimique réalisé à des températures comprises entre 200 et 320°C, et visant à éliminer l'eau et à modifier une partie de la matière organique de la biomasse pour casser les fibres. Pendant le processus de torréfaction, les organiques légers sont extraits et la structure de la biomasse est dépolymérisée et modifiée, conduisant ainsi à la cassure des fibres. Cette modification engendre un changement significatif des propriétés physiques de la biomasse :
- La biomasse devient friable ce qui facilite et améliore sa mise en forme et son compactage éventuels,
- La biomasse devient hydrophobe, et peut ainsi être stockée sur une longue durée sans subir une altération de sa qualité, due par exemple à une dégradation biologique ou à une fermentation.

Chaque type de biomasse possède une température de torréfaction qui lui est propre, et qui correspond à une élimination totale de l'eau et à une dégradation juste nécessaire de la matière organique pour obtenir l'altération des fibres responsables de la friabilité et de l'hydrophobie du matériau.

Or, avec ce type de procédé, la température de chauffage de la biomasse doit être parfaitement contrôlée au cours du temps, sous peine de dégrader irrémédiablement la biomasse. En effet, durant un tel procédé, une fois que l'eau de la biomasse a été éliminée lors d'une phase préliminaire de cuisson à une température modérée, de l'ordre de 90°C, une phase de chauffage postérieure de la biomasse anhydre à une température plus élevée, de l'ordre de 200°C à 300°C, va permettre d'obtenir la torréfaction de la biomasse. Si cette phase de chauffage postérieure est trop intense, à cause, soit d'un temps d'exposition trop long, soit d'une température de chauffage trop élevée, la biomasse anhydre va se dégrader en subissant notamment une perte de masse. Le document EP 2 530 134 A1 décrit un procédé de torréfaction d'une biomasse comprenant une étape de séchage et une étape de chauffage. Un procédé de torréfaction d'une biomasse selon l'invention, permet d'obtenir une biomasse torréfiée aux conditions requises, en mettant en oeuvre des moyens de contrôle permettant d'éviter une dégradation de cette biomasse lors d'une phase de chauffage non maitrisée.

L'invention a pour objet un procédé de torréfaction d'une biomasse dans un four.

La principale caractéristique d'un procédé de torréfaction selon l'invention est qu'il comprend les étapes suivantes :
- une étape de séchage réalisée à une température inférieure ou égale à 100°C pour chasser l'humidité de la biomasse,
- une étape de chauffage de la biomasse anhydre réalisée à une température inférieure ou égale à 300°C pour obtenir la torréfaction de ladite biomasse,
- une étape de pesage de la biomasse pendant les deux étapes précédentes au moyen d'une balance placée dans le four,
- une étape de contrôle consistant à diminuer la température du four dès que la masse de la biomasse atteint une valeur prédéterminée.

Lorsque la biomasse est introduite dans le four pour être torréfiée, elle est chargée en eau. L'étape de séchage va consister à porter le four à une température de chauffage modérée, par paliers successifs, pour chasser cette eau. L'étape de chauffage, qui est postérieure à l'étape de séchage, va consister à augmenter la température du four jusqu'à une température plus élevée, par paliers successifs, pour commencer le processus de torréfaction à proprement parler. Ces deux étapes engendrent une perte de masse significative de la biomasse, qui a été initialement introduite dans le four. Or, si cette perte de masse est incontrôlée et qu'elle dépasse une valeur seuil, la biomasse va commencer à se dégrader et perdre certaines de ses propriétés. L'étape de pesage de la biomasse dans le four, qui est réalisée à la fois lors de l'étape de séchage et lors de l'étape de chauffage, va fournir en temps réel des informations sur la masse de la biomasse au cours du processus de torréfaction. Si la perte de masse est trop importante par rapport à une valeur de référence, un opérateur sera averti et pourra alors intervenir immédiatement et réduire la température du four pour enrayer cette perte de masse. Selon un autre mode de réalisation préféré d'un processus de torréfaction selon l'invention, la température du four est autorégulée au moyen d'une unité de commande relié à un moyen de pesage de la biomasse. Pour cette configuration, dès que la perte de masse atteint une valeur prédéfinie, un signal est envoyé à l'unité de commande, qui baisse instantanément la température du four. L'étape de pesage peut être continue dans le temps durant tout le procédé de torréfaction, ou bien n'être que séquentielle sur des périodes prédéterminées. Il faut bien préciser que l'étape de pesage s'effectue dans le four, au cours du procédé de torréfaction. Un procédé selon l'invention peut avantageusement s'appliquer à du bois.

Avantageusement, l'étape de pesage est réalisée en continu durant ledit procédé. De cette manière, le contrôle de la masse de la biomasse est rigoureux et précis, en limitant voire en annulant les risques de chauffage excessif de la biomasse, sur une période suffisamment longue, qui pourrait conduire à une dégradation importante et irréversible de ladite biomasse torréfiée.

L'intérêt de pouvoir connaitre à tous les instants la masse de la biomasse, est de pouvoir intervenir le plus rapidement possible sur la température du four, en abaissant celle-ci de manière à préserver la qualité de la biomasse. Cette étape de contrôle peut être manuelle, au moyen de l'intervention d'un opérateur qui est informé, par un signal sonore ou visuel, d'une baisse excessive de la masse de la biomasse. Elle peut également être automatique, grâce à une unité de commande régulant en permanence la température du four, en fonction des signaux qu'elle reçoit sur la masse de la biomasse.

Préférentiellement, l'étape de contrôle est réalisée automatiquement au moyen d'une unité de commande reliée à ladite balance et régulant la température du four. Autrement dit, dès que la masse de la biomasse atteint une valeur minimale prédéfinie, la balance transmet un signal vers l'unité de commande, qui abaisse aussitôt la température du four pour stopper instantanément cette perte de masse. L'étape de séchage est réalisée à une température inférieure ou égale à 100°C, l'étape de chauffage étant réalisée à une température inférieure ou égale à 300°C. Lorsque la biomasse est du bois, la température maximale de séchage est préférentiellement de 90° et la température maximale de chauffage est de 190°.

Avantageusement, un procédé de torréfaction selon l'invention comprend une étape de stabilisation postérieure à l'étape de chauffage et réalisée à une température constante, inférieure ou égale à 170°. Lorsque la biomasse est du bois, cette température de stabilisation est comprise entre 150° et 160°.

De façon préférentielle, un procédé de torréfaction selon l'invention, comprend une étape de refroidissement postérieure à l'étape de stabilisation et pour laquelle la température du four baisse à partir de la température de stabilisation jusqu'à une valeur inférieure à 40°C.

Préférentiellement, un procédé de torréfaction selon l'invention, comprend une étape d'injection de vapeur d'eau pendant au moins les étapes de séchage et de chauffage.

De façon avantageuse, la balance de pesage comprend une structure déformable, un capteur de déplacement et des éléments de support de la charge de la biomasse, lesdits éléments étant portés par ladite structure, une réduction de la masse de la biomasse entrainant une déformation de la structure mesurée par ledit capteur.

Préférentiellement, la balance présente un isolant thermique placé entre la structure déformable et les éléments de support.

Un procédé de torréfaction d'une biomasse selon l'invention présente l'avantage de mettre en oeuvre une étape de contrôle de la qualité du bois durant ledit processus, au moyen d'une simple balance de pesage, fiable et précise. Ils ont de plus l'avantage de proposer cette étape supplémentaire de contrôle, sans nécessiter la mise en place d'une installation encombrante.

On donne ci-après, une description détaillée d'un mode de réalisation préféré d'un procédé de torréfaction du bois et d'une balance de pesage selon l'invention, en se référant aux figures 1 à 2.
- La figure 1 est un diagramme d'un exemple de variation de la température à l'intérieur d'un four en fonction du temps, lors du déroulement d'un procédé de torréfaction du bois selon l'invention,
- La figure 2 est une vue en perspective simplifiée d'une balance de pesage pour la réalisation de l'étape de pesage d'un procédé de torréfaction selon l'invention.

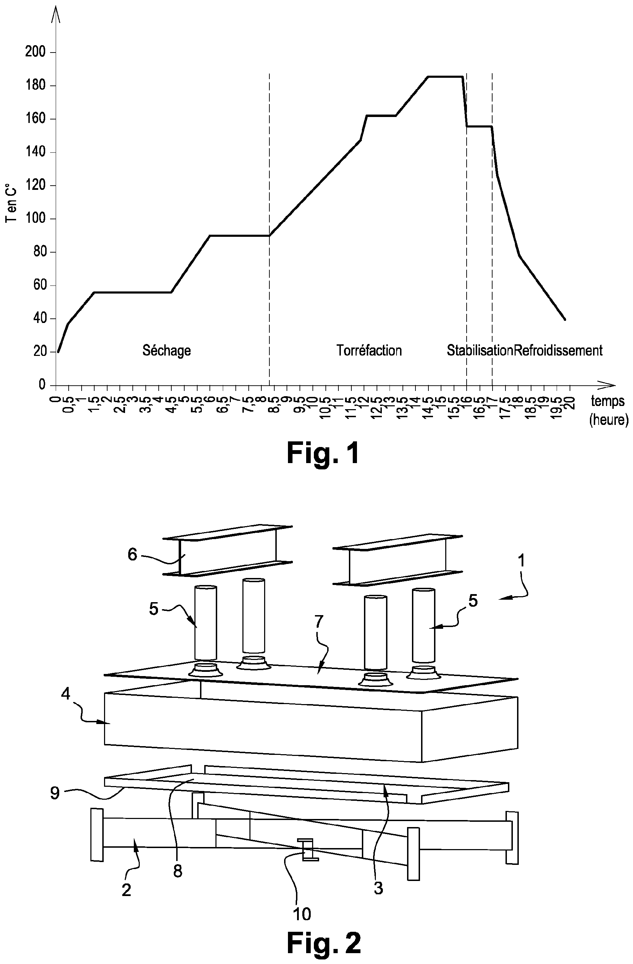

En se référant à la figure 1, un procédé de torréfaction du bois selon l'invention est réalisé dans une installation comportant un four, ledit procédé comprenant les étapes suivantes :
- une étape de séchage du bois pour chasser l'humidité dudit bois,
- une étape de chauffage du bois anhydre, réalisée à une température plus élevée que celle de l'étape de séchage pour obtenir la torréfaction du bois,
- une étape de stabilisation,
- une étape de refroidissement

L'étape de séchage permet de chasser l'humidité intrinsèque du bois, en début de processus. Cette étape de séchage s'effectue par paliers successifs de montée en température jusqu'à atteindre une température finale de l'ordre de 90°C. Cette étape est réalisée dans un environnement humide, obtenu au moyen de cycles précis d'injection de vapeur d'eau. A la fin de cette étape, le bois est plus léger car il a perdu toute son eau.

L'étape de chauffage du bois anhydre est en continuité de l'étape de séchage, et permet d'obtenir la torréfaction du bois. Cette étape de chauffage du bois se déroule au moyen d'une hausse de la température du four, par paliers successifs, jusqu'à atteindre une température maximale en fin d'étape, de 190°C. La température et la durée de chaque palier sont définies à partir des paramètres saisis par un opérateur et des tables de données. Durant cette étape, le taux d'oxygène dans le four est particulièrement contrôlé pour éviter une auto inflammation ou une explosion dans le four. Ce taux est régulé afin qu'il ne dépasse jamais 6%. Cette étape de chauffage s'effectue également dans un environnement humide, obtenu au moyen de cycles précis d'injection de vapeur. Au cours de cette étape, le bois anhydre continue de perdre de sa masse.

L'étape de stabilisation, qui suit la phase de chauffage, consiste à baisser la température du four, pour réaliser un palier de température généralement situé entre 150°C et 160°C. Cet abaissement de la température est obtenu par un arrêt de l'apport en énergie calorifique et des injections de vapeur d'eau. Une fois que cette température de stabilisation a été atteinte, lesdites injections de vapeur d'eau sont réactivées, de manière à réaliser cette phase de stabilisation en atmosphère humide.

L'étape de refroidissement constitue la dernière étape d'un cycle de torréfaction et est réalisée au moyen d'une baisse de la température du four depuis la température de stabilisation. Ainsi, lorsque la phase de stabilisation est terminée, cette baisse de température est régulée par des injections de vapeur jusqu'à environ 100°C. Ensuite, de l'air ambiant est introduit dans le four jusqu'à ce que la température dudit four atteigne moins de 40°C.

Ainsi, durant tout un cycle de ce procédé de torréfaction du bois, et particulièrement lors des étapes de séchage et de chauffage, il est fondamental de pouvoir contrôler les pertes de masse du bois en cours de traitement. En effet, si ces pertes s'avéraient trop importantes, le bois risquerait de se dégrader significativement et de façon irréversible, entrainant une altération des ses propriétés. Autrement dit, le paramètre le mieux adapté pour vérifier la qualité de la torréfaction est la perte de masse du bois anhydre durant le procédé de torréfaction.

Pour contrôler ces pertes de masse, un procédé de torréfaction du bois selon l'invention, comprend une étape de pesage en continu du bois dans le four, durant les quatre étapes essentielles dudit procédé : le séchage, le chauffage, la stabilisation et le refroidissement.

En se référant à la figure 2, l'étape de pesage est réalisée au moyen d'une balance 1 de pesage du bois, qui est insérée dans le four et qui est connectée à une unité de commande, apte à réguler la température du four. De cette manière, lorsque la perte de masse du bois atteint une valeur seuil prédéterminée par rapport à la phase de l'étape considérée, la balance 1 transmet un signal à l'unité de commande, qui abaisse aussitôt la température du four pour enrayer cette perte de masse.

La balance 1 comprend une structure déformable 2, un plateau de maintien 3, un isolant thermique 4, au moins une tige de transmission 5 de la charge et un support 6 de la charge de bois. Le support 6 de la charge de bois constitue l'élément le plus élevé de la balance 1 et est constitué d'une pièce rigide pouvant par exemple revêtir la forme d'un cadre ou d'une grille sur lequel est apposé ledit bois. Ce support 6 est généralement disposé horizontalement dans le four. Préférentiellement, la balance 1 possède quatre tiges de transmission 5 verticales et rigides, disposées aux quatre coins d'un rectangle fictif et destinées à transmettre à la structure déformable 2, les efforts inertiels engendrés par la masse de bois. Ces quatre tiges 5 ont chacune une extrémité supérieure qui est au contact du support 6 de la charge de bois, et une extrémité inférieure qui est au contact du sol 7 d'une cellule de torréfaction contenant le four. L'ensemble constitué par la structure déformable 2, le plateau de maintien 3 et l'isolant thermique 4 est placé sous le sol 7 de ladite cellule, ladite structure déformable 2 représentant la partie la plus basse de cet ensemble et l'isolant thermique 4 sa partie la plus haute. La structure déformable 2 est un élément sensible en forme de croix, qui est dimensionné par calcul en fonction des capacités de la cellule de traitement et des essences torréfiées, afin d'obtenir la sensibilité désirée sans fragiliser la résistance mécanique de la structure du four. Le plateau de maintien 3 est rectangulaire et horizontal, et présente un fond rectangulaire 8 plan possédant une bordure périphérique 9. Ledit plateau 3 est destiné à venir au contact de la structure déformable 2 en étant placé au-dessus de celle-ci. L'isolant thermique 4 a une forme parallélépipédique rectangle, et est dimensionné pour venir se poser sur le plateau de maintien 3, en étant encadré par la bordure 9. La structure déformable 2, qui supporte indirectement le bois à torréfier, a tendance à se déformer dès qu'une variation de la masse de ce bois est observée. De cette manière, lors par exemple de l'étape de chauffage, si la perte de masse du bois anhydre atteint une valeur seuil programmée, la structure déformable 2 se déforme en conséquence, et peut alors transmettre un signal électrique à l'unité de commande, qui va alors déclencher une baisse de température immédiate dans le four. Un capteur capacitif 10 permet de mesurer la déformée de la structure déformable 2 lors d'une perte de masse du bois, et permet ainsi de savoir à quel moment cette perte atteint une valeur critique.

L'étape de pesage durant le procédé de torréfaction du bois selon l'invention se déroule comme suit. Une quantité de bois déterminée est chargée sur le support 6 de la balance 1, qui est initialement installée dans la cellule de torréfaction contenant le four. L'étape de séchage est alors réalisée alors que le bois se retrouve sur le support 6 de la balance 1. Une fois que le séchage du bois est terminé, l'étape de chauffage peut alors commencer, la charge de bois étant toujours posée sur le support 6 de la balance 1. Durant cette étape de chauffage, toute perte de masse du bois anhydre est répercutée jusqu'à la structure déformable 2, qui réagit en se déformant et donc en se déplaçant.

Un procédé de torréfaction selon l'invention, met également en oeuvre une étape de contrôle de la qualité du bois. En effet, si la perte de masse du bois anhydre atteint une valeur seuil prédéterminée au-delà de laquelle le bois risque de se dégrader sévèrement, le capteur capacitif 10, qui mesure en continu les déplacements de ladite structure 2, transmet l'information à l'unité de commande, qui va instantanément déclencher une baisse de la température dans le four afin de stopper ladite perte de masse.

De cette manière, durant toute la durée du procédé de torréfaction du bois selon l'invention, le bois ne subira aucune perte de masse critique, susceptible de le dégrader et donc de modifier ses propriétés.

## Revendications

1. Procédé de torréfaction d'une biomasse dans un four, **caractérisé en ce qu'**il comprend les étapes suivantes :
- une étape de séchage réalisée à une température inférieure ou égale à 100°C pour chasser l'humidité de ladite biomasse,
- une étape de chauffage de la biomasse anhydre réalisée à une température inférieure ou égale à 300°C pour obtenir la torréfaction de ladite biomasse,
- une étape de pesage de la biomasse pendant les deux étapes précédentes au moyen d'une balance (1) placée dans le four,
- une étape de contrôle consistant à diminuer la température du four dès que la masse de la biomasse atteint une valeur prédéterminée.

2. Procédé de torréfaction selon la revendication 1, **caractérisé en ce que** l'étape de pesage est réalisée en continu durant ledit procédé.

3. Procédé de torréfaction selon l'une quelconque des revendications 1 ou 2, **caractérisé en ce que** l'étape de contrôle est réalisée automatiquement au moyen d'une unité de commande régulant la température du four et reliée à la balance (1) de pesage placée dans le four.

4. Procédé de torréfaction selon l'une quelconque des revendications 1 à 3, **caractérisé en ce qu'**il comprend une étape de stabilisation postérieure à l'étape de chauffage et réalisée à une température constante, inférieure ou égale à 170°.

5. Procédé de torréfaction selon la revendication 4, **caractérisé en ce qu'**il comprend une étape de refroidissement postérieure à l'étape de stabilisation et pour laquelle la température du four baisse à partir de la température de stabilisation jusqu'à une valeur inférieure à 40°C.

6. Procédé de torréfaction selon l'une quelconque des revendications 1 à 5, **caractérisé en ce qu'**il comprend une étape d'injection de vapeur d'eau pendant au moins les étapes de séchage et de chauffage.

7. Procédé de torréfaction selon l'une quelconque des revendications 1 à 6, **caractérisé en ce que** la balance (1) de pesage comprend une structure déformable (2), un capteur (10) de déplacement et des éléments de support (5,6) de la charge de la biomasse, lesdits éléments (5,6) étant portés par ladite structure (2), et **en ce qu'**une réduction de la masse de la biomasse entraine une déformation de la structure (2) mesurée par ledit capteur (10).

8. Procédé de torréfaction selon la revendication 7, **caractérisé en ce que** la balance (1) présente un isolant thermique (4) placé entre la structure déformable (2) et les éléments de support (5,6).

## Patentansprüche

1. Röstverfahren einer Biomasse in einem Ofen, **dadurch gekennzeichnet, dass** es die folgenden Schritte umfasst:
- einen Trocknungsschritt, der bei einer Temperatur unter oder von gleich 100 °C durchgeführt wird, um die Feuchtigkeit aus der Biomasse zu entfernen,
- einen Heizschritt der wasserfreien Biomasse, der bei einer Temperatur unter oder von gleich 300 °C durchgeführt wird, um die Biomasse zu rösten,
- einen Wiegeschritt der Biomasse während der zwei vorangehenden Schritte mittels einer im Ofen platzierten Wage (1),
- einen Steuerschritt, der darin besteht, die Temperatur des Ofens zu senken, sobald die Masse der Biomasse einen bestimmten Wert erreicht.

2. Röstverfahren nach Anspruch 1, **dadurch gekennzeichnet, dass** der Wiegeschritt kontinuierlich während des Verfahrens durchgeführt wird.

3. Röstverfahren nach einem der Ansprüche 1 oder 2, **dadurch gekennzeichnet, dass** der Steuerschritt automatisch mittels einer Steuereinheit durchgeführt wird, welche die Temperatur des Ofens einstellt und mit der im Ofen platzierten Wiegewage (1) verbunden ist.

4. Röstverfahren nach einem der Ansprüche 1 bis 3, **dadurch gekennzeichnet, dass** es einen Stabilisierungsschritt nach dem Heizschritt umfasst, der bei einer konstanten Temperatur unter oder von gleich 170° durchgeführt wird.

5. Röstverfahren nach Anspruch 4, **dadurch gekennzeichnet, dass** es einen Abkühlschritt nach dem Stabilisierungsschritt umfasst, bei dem die Temperatur des Ofens ab der Stabilisierungstemperatur auf einen Wert unter 40 °C sinkt.

6. Röstverfahren nach einem der Ansprüche 1 bis 5, **dadurch gekennzeichnet, dass** es einen Einleitschritt von Wasserdampf während mindestens der Trocken- und Heizschritte umfasst.

7. Röstverfahren nach einem der Ansprüche 1 bis 6, **dadurch gekennzeichnet, dass** die Wiegewaage (1) eine verformbare Struktur (2), einen Verlagerungssensor (10) und Stützelemente (5, 6) der Last der Biomasse umfasst, wobei die Elemente (5, 6) von der Struktur (2) getragen werden, und dass eine Reduzierung der Masse der Biomasse zu einer von dem Sensor (10) gemessenen Verformung der Struktur (2) führt.

8. Röstverfahren nach Anspruch 7, **dadurch gekennzeichnet, dass** die Wage (1) einen Wärmeisolator (4) aufweist, der zwischen der verformbaren Struktur (2) und den Stützelementen (5, 6) platziert ist.

## Claims

1. A method of roasting biomass in an oven, **characterized in that** it comprises the following steps:
- a drying step carried out at a temperature lower than or equal to 100°C to drive the moisture out of said biomass,
- a step for heating the anhydrous biomass carried out at a temperature below or equal to 300°C to obtain the roasting of said biomass,
- a step for weighing the biomass in the two previous steps using a scale (1) placed in the oven,
- an inspection step consisting of decreasing the temperature of the oven once the mass of the biomass reaches a predetermined value.

2. The roasting method according to claim 1, **characterized in that** the weighing step is carried out continuously during said method.

3. The roasting method according to any one of claims 1 or 2, **characterized in that** the inspection step is carried out automatically using a control unit regulating the temperature of the oven and connected to the weighing scale (1) placed in the oven.

4. The roasting method according to any one of claims 1 to 3, **characterized in that** it comprises a stabilization step after the heating step and carried out at a constant temperature, below or equal to 170°.

5. The roasting method according to claim 4, **characterized in that** it comprises a cooling step after the stabilization step and for which the temperature of the oven decreases from the stabilization temperature to a value below 40°C.

6. The roasting method according to any one of claims 1 to 5, **characterized in that** it comprises a step for injecting steam during at least the drying and heating steps.

7. The roasting method according to any one of claims 1 to 6, **characterized in that** the weighing scale (1) comprises a deformable structure (2), a movement sensor (10) and support elements (5, 6) supporting the load of the biomass, said elements (5, 6) being supported by said structure (2), and **in that** a reduction in the mass of the biomass causes a deformation of the structure (2) measured by said sensor (10).

8. The roasting method according to claim 7, **characterized in that** the scale (1) has a thermal insulator (4) placed between the deformable structure (2) and the support elements (5, 6).
